# EUROPEAN PATENT APPLICATION

(11) **EP 2 477 288 A1**
(43) Date of publication of application: **18.07.2012**
(21) Application number: 11275008.8
(22) Date of filing: 12.01.2011
(51) Int. Cl.: H02G 3/00, G06F 17/00

(54) **Assisting with installation of cabling in a build/equipping project**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A method/system for assisting with installing cabling in a build/equipping project receives (302) candidate cabling data (109) describing characteristics of a set of cables, and processes the received candidate cabling data in relation to cable management data provided by a cable management system (108) and cable occurrence data provided by a project management system (110) in order to determine (310) whether the candidate cabling data is to be loaded into the cable management system for use in the project.

## Description

The present invention relates to assisting with installation of cabling in a build/equipping project.

The installation of cabling in large scale projects is a time-consuming task. Software systems are known that are intended to control the design, routing and installation of various types of cabling. However, in some cases, another computerised project management system is used to control other, or more general, aspects of the installation project as well as managing all parts/components (product breakdown structure) and documentation.

In some cases, the cabling management system can be used as the master for cabling information, but aspects such as cable types, system codes, compartment codes and devices may be mastered by the other project management system as "parts required". Thus, the cabling management system must be used as the slave for these items, whereas for other items the cabling management system needs to be used as the master for all cabling information, e.g. the nodal network structure, the cable lDs, the cable start and end point, terminations, routes, etc.

It is usual for suppliers to produce data sheets for providing the purchaser/project operator with the information required to produce cable routing and termination schedules. These data sheets need to be consistent for all the management systems being used or problems can arise. The data sheets in large scale projects can be very lengthy and manual validation is time consuming/expensive and prone to human error and therefore impractical. Allowing imprecise data to be loaded into the cable management system can result in incorrect numbers or types of cables being supplied, or in missing cables, which can delay the installation project, resulting in significant losses/costs.

Embodiments of the present invention are intended to address at least some of the problems discussed above.

According to a first aspect of the present invention there is method of assisting with installing cabling in a build/equipping project, the method including:
receiving candidate cabling data describing characteristics of a set of cables, and
processing the received candidate cabling data by checking the candidate cabling data in relation to:
   cable management data provided by a cable management system, the cable management data describing a set of cables to be installed by the project, and
   cable occurrence data provided by a project management system, the project management system including data describing a plurality of components to be installed by the project, including occurrences of cables,

in order to determine whether the candidate cabling data is to be loaded into the cable management system for use in the project.

The candidate cabling data may comprise a data set listing a plurality of cables, each of the cables having an associated plurality of characteristics. The characteristics may be selected from a set including: estimated length of the cable; whether the cable needs to be run in a conduit; minimum permitted length of the cable; maximum permitted length of the cable; information regarding equipment at "from" end of the cable; information regarding equipment at "to" end of the cable; cable installation notes.

The processing of the received candidate cabling data may include checking whether a said characteristic passes or fails a test checking whether the characteristic is presented in a correct format. The correct format may be selected from a set including: characteristic is not blank; characteristic has a numerical value; maximum number of characters; characteristic has one of a plurality of expected values. The processing of the received candidate cabling data may include checking whether a said characteristic passes or fails a test checking whether the cable is present multiple times in the candidate cabling data. The processing of the received candidate cabling data may include checking whether a said characteristic passes or fails a test checking whether the cable has a same end device identifier at both ends.

The processing of the received candidate cabling data may include checking whether a said characteristic is consistent with a corresponding characteristic stored in the cable management system and/or the project management system, e.g. an identifier of an end device specified for the cable corresponds to an end device specified in the project management system.

If a said test is failed then the method may further display information identifying the characteristic that failed the test. The method may further include offering a user an option of viewing further details regarding the failed test, e.g. a description/explanation of the test.

The processing of the received candidate cabling data may include checking whether a said cable in the candidate cabling data is a duplicate of a cable already loaded into the cable management system. If the cable in the candidate cabling data is found to be a duplicate then the method may include seeking further confirmation from a user in order for the data to be loaded into the cable management system. The further confirmation may include allowing a user to select all or some of the cables that were found to be duplicates for loading into the cable management system.

The candidate cabling data may be in a form of a spreadsheet file.

According to another aspect of the present invention there is provided a computer program element comprising: computer code means to make the computer execute methods substantially as described herein. The element may comprise a computer program product.

According to another aspect of the present invention there is provided a device adapted to assist with installing cabling in a build/equipping project, the device including:
a device configured to receive candidate cabling data describing characteristics of a set of cables,
a processing device configured to process the received candidate cabling data in relation to:
   cable management data provided by a cable management system that includes data describing a set of cable types to be installed by the project, and
   cable occurrence data provided by a project management system that includes data describing a plurality of components to be installed by the project, including occurrences of cables,

in order to determine whether the candidate cabling data is to be loaded into the cable management system for use in the project.

The device configured to process the received candidate cabling data may be a computing device executing a web-based application.

According to a further aspect of the present invention there is provided a system adapted to assist with installing cabling in a build/equipping project, the system including:
a cable management system providing data comprising a set of cable types to be installed by the project;
a project management system providing data describing a plurality of components to be installed by the project, including occurrences of cable types;
a device configured to receive candidate cabling data describing characteristics of a set of cables, and
a device configured to process the received candidate cabling data by checking the candidate cabling data in relation to the cable type data of the cable management system and/or the cable type occurrence data of the project management system in order to determine whether the candidate cabling data is to be loaded into the cable management system for use in the project.

Whilst the invention has been described above, it extends to any inventive combination of features set out above or in the following description.

Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 schematically illustrates a cable management system, a project management system and a computing device configured with a tool for validating cabling data;
Figure 2 is an example of a cabling data sheet;
Figure 3 schematically illustrates steps performed by the tool for validating the cabling data, and
Figures 4, 5 and 6 are example screen displays generated by the tool in use.

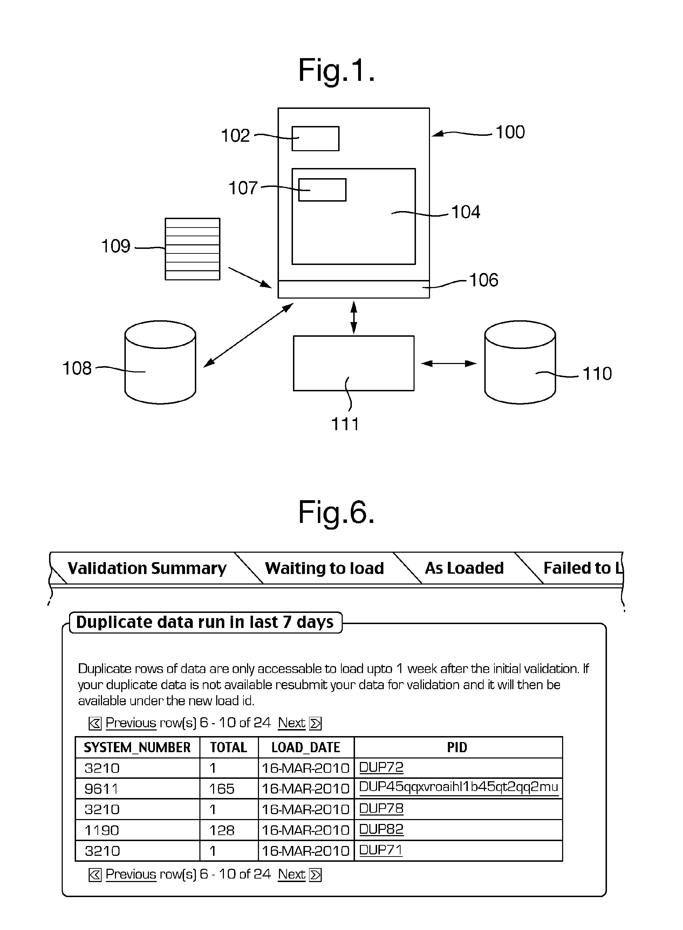

Figure 1 shows parts of a system used to assist with installing cabling in a project. The project can comprise the building of a new installation or vehicle, e.g. a marine vessel such as a ship or submarine, or equipping an existing installation with new technology, e.g. fitting a new communications network into a building. References to "assisting with installing cabling" herein should be interpreted broadly and can cover project stages relating to cabling, from design through to installation and commissioning sign off. The system includes a computing device 100 having a processor 102 and a memory 104. Other components typically associated with the computing device, such as a display and user input means, will be familiar to the skilled person and need not be described here in detail. The computer further includes an interface 106 for communicating with remote systems over a communications network.

Figure 1 further shows a cable management system 108 that can control the design, routing and installation of various types of cabling in the project and also provides data comprising a set of cable types to be installed by the project. An example of a suitable system is CMPIC (Configuration Managed Project Integrated Cabling), produced by Cloudis Limited of Manchester, United Kingdom. CMPIC can manage the design of the cables prior to, as well as during, installation. The status of a cable's route and termination (1 cable, 2 statuses) can be captured at all stages of the project, from design through to installation and commissioning sign off. One of the key validation checks in CMPIC is cable maturity. If a cable has been installed on a ship and CMPIC has received the appropriate status updates, a change to design information could not be made via any straightforward method. A change request would have to be raised to reduce the route status, with design and installation teams being made aware of the changes and impact. Then the cable route status would increment again at version 2 (the pull sheet being the item which would be at version 2). At all times it is possible to establish from CMPIC how much length of each cable type is required at each site. It is possible to deliver drums of cables to each site and enter this information into CMPIC, as cables are cut and installed the length available on each drum can be managed.

Also shown in Figure 1 is a project management system 110 that provides data describing a plurality of components to be installed by the project, including occurrences of the cable types. An example of a suitable system is Windchill by PTC of Needham, MA, USA. A data store/warehouse 111 may be associated with the system 110, which allows at least some of its data to be accessed without directly accessing the system itself. Thus, the project management system and the cable management system contain data relating to the cables to be installed by the project, but the data sets are stored separately and one is not automatically updated when the other is modified. For instance, in some cases, the project management system does not store information such as the start and end points of cables and there may be no correlation between the project management system and the cable management system in terms of unique cable identifiers. The project management system may only have some master items, such as system code (product breakdown); occurrence information (name and location); compartment code; cable types (e.g. no. of cores, overall diameter, voltage, etc), and their corresponding corporate numbers.

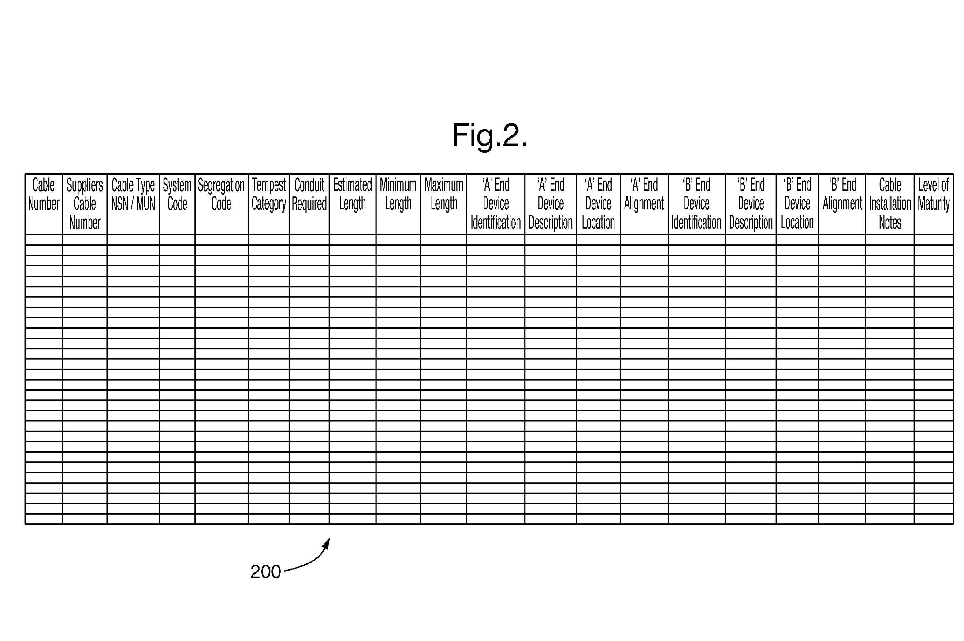

Typically, a cable supplier will be required to provide a data sheet to the purchaser working on the project, the sheet including the information that is required to produce the cable routing and termination schedules for the project. The cabling data load sheets may be for design purposes initially and then be used as information for installation. A spreadsheet 200 showing the format of an example data sheet (no cable entries included) is shown in Figure 2. In practice, the cable data entered on this sheet needs to be very precise because allowing erroneous data to be loaded into the cable management system 108 can result in incorrect numbers or types of cables being supplied, or in missing cables, which can detriment the project. The data loaded into the cable management system also needs to be consistent with the cable data stored in the project management system.

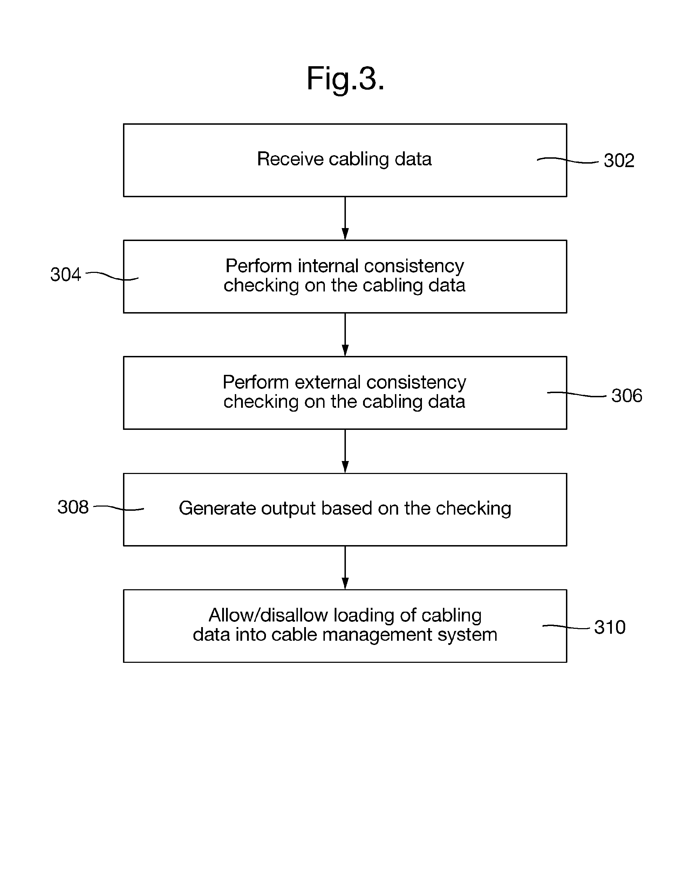

The memory 104 of the computer 100 includes code 107 that, when executed, configures the computer to provide a tool for validating a cabling data sheet 109, which may be based on the spreadsheet 200. Referring to Figure 3, example steps of this validation process are shown. It will be appreciated that in alternative embodiments, some of the steps shown may be re-ordered or omitted and that the data and code can be created in any suitable format, using any suitable programming language.

At step 302 cabling data is received by the application. Typically, the data will be loaded in the form of a spreadsheet (e.g. a Microsoft Excel file) completed by the supplier/contractor. Further information regarding the data elements of the example data sheet of Figure 2 is given in the table below:

| **Data Element** | **Remarks** |
|---|---|
| Cable Number | Local number allocated to the cable by Stage 1 of the project (i.e. not from CMPIC). Number organised by system and noted on System Schematics. |
| Supplier's Cable Number | Cable number allocated by the supplier (where available). |
| Cable Type NSN/MUN | Identifies the type of cable required from the CVF pick list |
| System Code | The code of the system / sub-system |
| Segregation Code | Identifies segregation requirements of the cable based on what the cable is carrying (e.g. HV, digital data). |
| TEMPEST Category | Identifies whether the cable is carrying Red or Black data. |
| Conduit Required | Identifies whether the cable needs to be run in conduit for physical protection or EMC purposes. |
| Estimated Length | Estimated length from design engineer. |
| Minimum Length | The minimum permitted length of the cable if there are any such technical limitations |
| Maximum Length | The maximum permitted length of the cable if there are any such technical limitations |
| 'A' End Device Identification | The unique Occurrence Number of the equipment at the from end of the cable |
| 'A' End Device Description | The description of the equipment at the from end of the cable. |
| 'A' End Device Location | The compartment code of the compartment in which this equipment is sited |
| 'A' End Alignment | Identifies whether the 'A' end of the cable terminates with a plug or a socket. Expected value is A (Anti-clockwise) or C (Clockwise) or N/A - if unknown leave blank. |
| 'B' End Device Identification | The unique Occurrence Number of the equipment at the to end of the cable |
| 'B' End Device Description | The description of the equipment at the to end of the cable. |
| 'B' End Device Location | equipment is sited. |
| 'B' End Alignment | Identifies whether the 'B' end of the cable terminates with a plug or a socket. Expected value is A (Anti-clockwise) or C (Clockwise) or N/A - if unknown leave blank. |
| Cable Installation Notes | Free text to cover any special requirements or instructions not already covered. |
| Level of Maturity | The level of maturity of the Phase B/C Cable Data. Value expected is C0, C1, C2, C3 or C4 - where C4 is the most mature. |

It will be appreciated that these data elements are exemplary only and in alternative embodiments different types of data elements may be used instead of, or in addition to, these elements.

The tool 107 then performs various checks on the loaded data, typically on a row-by-row basis, in order to try to ensure consistency with the data held in the cable and project management systems 108, 110. In some embodiments the tool 107 can be web-based to provide convenient access for users. A user may be allowed to select data relating to various projects using the tool.

At step 304 "internal" checks are performed by the tool 107, e.g. checks based on the format/content of each data element, which can be performed internally by the application without necessarily accessing external data sources/applications. At step 306 checks that involve "external" data are performed, i.e. checks regarding whether the data in the data sheet 109 comply with data requirements relating to the cable management system 108 and/or the project management system 110.

Example of checks that may be performed at steps 304 and 306 on the data elements of the example data sheet of Figure 2 are given below:

| **Data Element** | **Check(s) performed on Data Element** |
|---|---|
| Cable Number | 1) Not blank 2) Is of the format xxxx-nnn-nnn where xxxx must be a valid system code and nnn must be alpha-numerical. 3) Check that same cable ID not entered multiple times on same spreadsheet. 4) Initially check for duplication, has it already been loaded into CMPIC? 5) Check that cable does not have same A & B End Device ID. |
| Supplier's Cable | 1) Free-format, i.e., not validated Number 2) Max chars = 12. |
| Cable Type | 1) Must not be blank 2) Should have 40million number in CMPIC & Windchill. |
| System Code | 1) Must exist in Windchill 2) Must exist in CMPIC 3) If this column was blank previous loader took the system code to be the first component of the cable number. 4) Force upper case, e.g., 522I = 522L |
| Segregation Code | 1) Must not be blank. 2) Must exist in CMPIC 3) Force any lower case characters to upper case, e.g. SP4b to SP4B. |
| Tempest Category | 1) Must exist in CMPIC 2) Force upper case, e.g., n/a to be N/A. |
| Conduit Required | 1) Allow Y or N or Yes or No - translate Y or Yes to Full and N or No to None on load. |
| Estimated Length | 1) Numerical value expected. If value found with m value strip this value off, e.g., 12m = 12. |
| Minimum Length | 1) Numerical value expected. If value found with m value strip this value off, e.g., 12m = 12. 2) On load translate N/A to 0. |
| Maximum Length | 1) Numerical value expected. If value found with m value strip this value off, e.g., 12m = 12. 2) On load translate N/A to 9999. |
| 'A' End Device | 1) Not blank |
| Identification | 2) Is of the format xxxx-nnnn or xxxx-nn where xxxx is a valid system code and nn is numerical. 3) Must exist in Windchill. |
| 'A' End Device | 1) Must not be blank |
| Description | 2) Validate against Windchill, must be exact match. 4) Must not exceed 60 characters (same limit as Windchill). |
| 'A' End Device | 1) Validate against Windchill, must be exact match. |
| Location | 2) Should exist in CMPIC as a location, if it doesn't create it on load. 3) Must not be blank. |
| 'A' End | 1) Not validated, expected values of Plug, Socket or |
| Alignment | Gland. |
| 'B' End Device | 1) Not blank |
| Identification | 2) Is of the format xxxx-nnnn or xxxx-nn where xxxx is a valid system code and nn is numerical. 3) Must exist in Windchill. |
| 'B' End Device | 1) Validate against Windchill, must be exact match. |
| Description | 2) Must not exceed 60 characters (same limit at Windchill). 3) Must not be blank |
| 'B' End Device | 1) Validate against Windchill, must be exact match. |
| Location | 2) Should exist in CMPIC as a location, if it doesn't create it on load. |
| | 3) Must not be blank. |
| 'B' End Alignment | 1) Not validated, expected values of Plug, Socket or Gland. |
| Cable Installation | 1) Can be blank |
| Notes | 2) Must not exceed 1000 chars. |
| Level of Maturity | 1) Must not be blank 2) Must exist in CMPIC. 3) Force upper, e.g., if find c3 instead of C3. |

In the above examples, the checks performed on the "Supplier's Cable" "Cable Installation Notes" data elements are instances of the "internal" types of checks performed at step 304 (as they depend on the format of the data element, etc, only), whilst the checks performed on the "System Code" and "Segregation Code" data elements are instances of the "external" types of checks performed at step 306 (as they refer to data held in the cable and/or project management systems). In some embodiments the external checks will not access the cable and/or project management systems directly, but will, rather, access data sources, e.g. data warehouse 111, related to either or both of those systems.

The tool 107 keeps a record of the result of the checks performed for each data element and takes further action, depending on the results of the checks. The overall purpose of the checks is to determine whether or not the data sheet should be loaded into the cable management system 108. In some embodiments, if any or specific ones of the checks fail then the data sheet 109 is not allowed to be loaded into the cable management system 108 (step 310). In other embodiments, the user receives one or more messages (step 308) relating to failed checks, indicating that the data sheet should not be loaded into the cable management system, or will need to be modified in order to comply with the system's requirements. In yet further embodiments, the tool may automatically modify certain types of failed data elements in the data sheet to make them acceptable to the cable management system and then allow them to be loaded, e.g. convert lower case characters to upper case.

The data can be used to automatically direct/transport cables to the location where they are to be installed, e.g. by passing compartment/location information to a robot that transports the items to that compartment, and/or control machinery that at least partially performs installation.

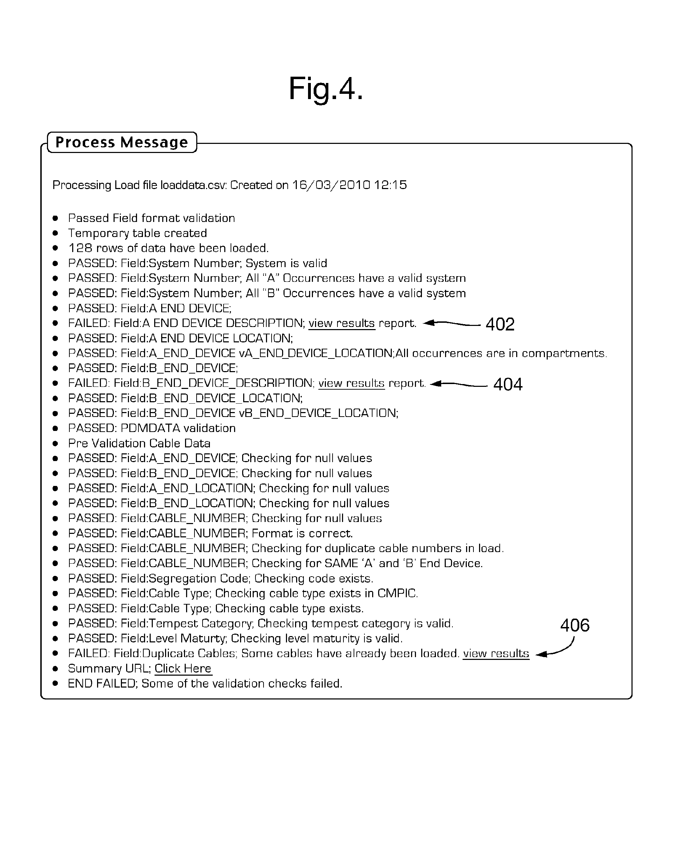

Figure 4 is an example screen display produced by an embodiment of the tool 107. The display 400 includes a list of PASSED/FAILED process messages showing the results of the tests. The tool can allow the user to examine the data elements that failed the checks in more detail, for instance, by selecting a "view results" option displayed next to the summaries of failures 402, 404 and 406, which can result in extra information being displayed, e.g. details of the check performed.

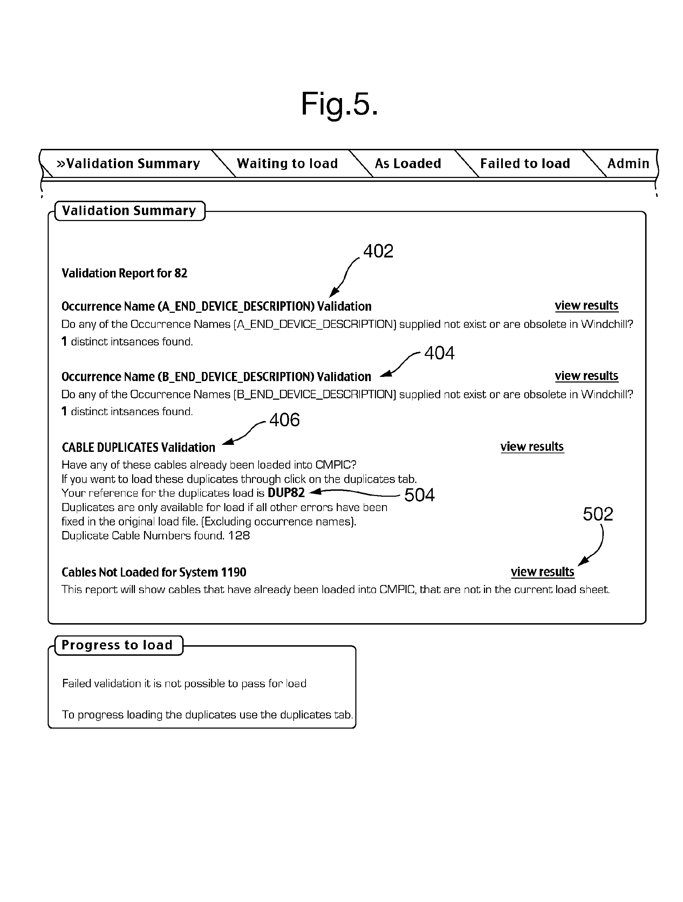

Figure 5 shows an example screen display 500 detailing the failures summarised in Figure 4:
Failure 402 indicates that the data element A_END_DEVICE_DESCRIPTION has an "Occurrence Names" fault. In this type of fault the device description does not exactly match that of the project management system. Upon loading into the cable management system, the data element will be updated with the corresponding device description value from the project management system and not from the data sheet. Failure 404 is a similar type of failure found in the B_END_DEVICE_DESCRIPTION data element.

Failure 406 indicates that the tool 107 has found that the cables in the data sheet already exist in the cable management system. Therefore, in the example tool, these must be processed via "Duplicates" tab and not via the "Admin" tab which is used for first inserts/new cables. Further details regarding this feature will be given below.

Link 502 can provide the user with a list of cables which have already been loaded into the cable management system that are not present in the current data sheet 107.

None of the above example error messages necessarily prevent the data sheet being loaded into the cable management system. However, in order to proceed with loading a data sheet where duplicates have been found, the user must select the "Duplicates" tab. To find the duplicate cables the user enters the reference/PID 504 ("82") given in the display of Figure 5. The Duplicates tab shows the duplicate cables which are available for loading, as shown in the example screen display of Figure 6. The user can then select individual cables for loading, or click the "Load All Duplicates" button to load all the duplicate cables available. An alert message may then be displayed to advise that the cables have been passed for loading. The user may view the progress of the load by selecting an option in the "PID" column.

Whilst the tool recognises when cables are duplicates it may continue to run all the same validation checks as when loading new cables, e.g. checking that segregation codes exist in CMPIC, device compartment valid and true in Windchill, etc. Therefore, Audit Logs such as those discussed above may be displayed. In some instances loading of the duplicate cables will not be permitted until all other errors are fixed (with the exception of device descriptions/occurrence names and cables running to and from the same device, for example).

The system described herein can quickly load considerable amounts of cabling data based on a simple spreadsheet template. A practical embodiment has been found capable of validating and loading data for 5000 cables in ten minutes. It can validate data against data held in management systems, thereby ensuring that the data loaded into the cable management system is consistent and correct, requiring little/no human interaction. Although the example detailed above checks data sheets in relation to a project management system and a cable management system, it will be understood that the tool can be extended to check the data in relation to data stored in further systems/data stores if required.

## Claims

1. A method of assisting with installing cabling in a build/equipping project, the method including:
receiving (302) candidate cabling data (109) describing characteristics of a set of cables, and
processing the received candidate cabling data by checking (304, 306) the candidate cabling data in relation to:
cable management data provided by a cable management system (108), the cable management data describing a set of cables to be installed by the project, and
cable occurrence data provided by a project management system (110), the project management system including data describing a plurality of components to be installed by the project, including occurrences of cables,
in order to determine (310) whether the candidate cabling data is to be loaded into the cable management system for use in the project.

2. A method according to claim 1, wherein the candidate cabling data (109) comprises a data set listing a plurality of cables, each of the cables having an associated plurality of characteristics.

3. A method according to claim 2, wherein the characteristics are selected from a set including: estimated length of the cable; whether the cable needs to be run in a conduit; minimum permitted length of the cable; maximum permitted length of the cable; information regarding equipment at "from" end of the cable; information regarding equipment at "to" end of the cable; cable installation notes.

4. A method according to claim 2 or 3, wherein the processing of the received candidate cabling data (109) includes checking (304) whether a said characteristic passes or fails a test that checks whether the characteristic is presented in a correct format.

5. A method according to claim 4, wherein the correct format is selected from a set including: the characteristic is not blank; the characteristic has a numerical value; the characteristics has no more than a maximum allowable number of characters; the characteristic has one of a plurality of expected values.

6. A method according to any one of claims 2 to 5, wherein the processing of the received candidate cabling data (109) includes checking (304) whether a said characteristic passes or fails a test that checks whether the cable is present multiple times in the candidate cabling data.

7. A method according to any one of claims 2 to 6, wherein the processing of the received candidate cabling data (109) includes checking (304) whether a said characteristic passes or fails a test that checks whether the cable has a same end device identifier at both ends.

8. A method according to any one of claims 2 to 7, wherein the processing of the received candidate cabling data (109) includes checking (306) whether a said characteristic is consistent with a corresponding characteristic stored in the cable management system (108) and/or the project management system (110), e.g. whether an identifier of an end device specified for the cable corresponds to an end device specified for that cable in the project and/or cable management system.

9. A method according to any one of claims 2 to 8, wherein if a said test is failed then the method further displays information (402 - 406) identifying the characteristic that failed the test.

10. A method according to claim 9, further including offering a user an option (402 - 406) of viewing further details regarding the failed test, e.g. a description/explanation of the test.

11. A method according to any one of the preceding claims, wherein the processing of the received candidate cabling data (109) includes checking (306) whether a said cable in the candidate cabling data is a duplicate of a cable already loaded into the cable management system (108).

12. A method according to claim 11, wherein if the cable in the candidate cabling data (109) is found to be a duplicate then the method includes seeking further confirmation from a user in order for the data relating to that cable to be loaded into the cable management system (108).

13. A method according to claim 12, wherein the further confirmation includes allowing a user to select all or some of the cables that were found to be duplicates for loading into the cable management system (108).

14. A computer program element comprising: computer code means to make the computer execute methods according to any one of the preceding claims.

15. A device adapted to assist with installing cabling in a build/equipping project, the device including:
a device (100) configured to receive (302) candidate cabling data (109) describing characteristics of a set of cables, and
a processing device (102, 107) configured to process the received candidate cabling data in relation to:
cable management data provided by a cable management system (108) that includes data describing a set of cable types to be installed by the project, and
cable occurrence data provided by a project management system (110) that includes data describing a plurality of components to be installed by the project, including occurrences of cables,
in order to determine (310) whether the candidate cabling data is to be loaded into the cable management system for use in the project.
